# DEMANDE DE BREVET EUROPEEN

(11) **EP 3 034 316 A1**
(43) Date de publication de la demande: **22.06.2016**
(21) Numéro de dépôt: 14198473.2
(22) Date de dépôt: 17.12.2014
(51) Int. Cl.: B42D 25/351, B42D 25/373, B42D 25/378, B42D 25/455, B42D 25/46

(54) **Carte à effet visuel marbré et procédé de fabrication associé**

(71) Demandeur: GEMALTO SA, 92190 Meudon (FR)
(72) Inventeur: Karafotis, Stephane, 92190 Meudon (FR); Kodjagueuzian, Gilles, 92190 Meudon (FR)
(74) Mandataire: Cassagne, Philippe M.J.

(57) **Abrégé**

La carte comporte une première couche (11) de substrat translucide ou transparente, préférentiellement en PVC, et une deuxième couche (12) de substrat, et une couche d'encre d'impression fissurée entre les deux couches de substrat de manière à laisser percevoir la deuxième couche de substrat (12) par les fissurations (19) de la couche d'encre. La couche d'encre d'impression fissurée (13) comporte une encre à effet miroir, assurant la réflexion de lumière à travers la première couche de substrat translucide ou transparente. La fissuration de la couche d'encre est obtenue lors de la fabrication de la carte par lamination.

## Description

La présente invention concerne la personnalisation graphique de documents multicouches, tels que des cartes de norme ISO 7810, que l'on désignera par la suite par le terme générique de «carte». L'invention concerne plus particulièrement un procédé de fabrication par lamination de telles cartes, afin de leur donner un effet visuel marbré, ainsi que les cartes obtenues par ce procédé.

Afin de créer un effet visuel marbré sur un document multicouches, il est connu de reproduire sur chaque document un motif marbré composé d'au moins deux couleurs au moyen d'une impression. Cependant, ce motif sera identique pour chaque document imprimé et son rendu peut être altéré par les traitements et protections appliquées postérieurement au document.

Un autre moyen connu de réaliser un effet visuel marbré, est l'impression d'un premier motif sur le document suivit d'une impression d'un second motif avec une encre qui lors de l'évaporation des solvants qu'elle contient, forme des fissures au travers desquelles le premier motif est visible. L'effet visuel marbré est ici aléatoire mais son rendu peut également être altéré par les traitements et protections appliquées postérieurement au document. De plus, l'utilisation d'une encre comprenant des solvants permettant la formation de fissures peut entrainer des surcoûts de fabrication car il y a nécessité d'un temps de séchage pour l'évaporation des solvants afin que l'effet visuel marbré soit satisfaisant.

On connaît aussi, par EP-2705958, une carte présentant un effet visuel marbré aléatoire, obtenu en conséquence de la fissuration d'une couche imprimée sur un substrat et recouverte d'une couche de protection translucide, la fissuration se produisant lors de la lamination de l'ensemble des couches. Du fait de cette fissuration de la couche imprimée, le substrat laisse apparaître sa surface localement au niveau des fissures, l'ensemble étant visible à travers la couche de protection translucide. Par le jeu de motifs imprimés préalablement sur le substrat, et de motifs de la couche imprimée second lieu et qui se trouve fissurée de manière aléatoire par la lamination, on obtient des effets marbrés recherchés. Ce procédé nécessite l'utilisation d'encre d'impression spécifiquement adaptée pour obtenir la fissuration lors de la lamination. Mais, par rapport au procédé indiqué précédemment, le traitement thermique et mécanique subi lors de la lamination garantit une meilleure durabilité de l'effet marbré, car ce dernier est en quelque sorte figé par l'adhésion de la couche de protection translucide et non altéré par la lamination de cette dernière.

La présente invention a pour but de proposer un nouveau procédé de fabrication de carte permettant d'obtenir une carte présentant un nouvel effet visuel, particulièrement un effet marbré aléatoire et durable. Elle vise aussi à permettre l'obtention de ce nouvel effet de manière simple et économique, par des étapes de procédé de type usuel pour la réalisation de cartes, tels que des cartes bancaires, cartes d'identification, etc.

Avec ces objectifs en vue, l'invention a pour objet un procédé de fabrication d'une carte multicouche présentant un effet marbré, selon lequel on dispose entre une première couche de substrat translucide ou transparent et une deuxième couche de substrat, une couche d'encre d'impression apte à se fissurer lors d'une étape de lamination de la carte, puis on procède à ladite lamination, de manière que ladite couche d'encre se fissure.

Selon l'invention, le procédé est caractérisé en ce que la couche d'encre d'impression comporte une encre à effet miroir.

Par encre à effet miroir, on comprendra une encre qui, après avoir été déposée sur un substrat transparent ou translucide, assure une réflexion au moins partielle de la lumière au travers de ce substrat. Par substrat transparent ou translucide, on entend un substrat neutre, notamment sans additif blanc tel qu'utilisé classiquement pour obtenir des substrats opaques.

Selon une disposition particulière, la couche d'encre à effet miroir est déposée sur le substrat transparent ou translucide. L'épaisseur de l'encre déposée est typiquement de 5 à 10 µm. Une épaisseur plus importante risque de conduire à une absence de tenue de l'encre par délamination.

Selon une autre disposition particulière, la deuxième couche de substrat est colorée dans sa masse. Alternativement la deuxième couche de substrat peut être transparente, et comporter en option un motif déposé sur sa face du côté de la couche d'encre miroir. Ce motif peut notamment être simplement une couche d'encre colorée uniforme.

Les deux couches de substrat sont préférentiellement en PVC, ou autre matière plastique ayant une température de transition vitreuse sensiblement égale ou légèrement inférieure à celle du PVC, c'est à dire de l'ordre de 75 à 85 °C. Il a en effet été constaté par les inventeurs que la fissuration de l'encre ne se produit pas si le substrat a une température de transition vitreuse élevée, en particulier si le substrat est en polycarbonate.

Préférentiellement l'encre à effet miroir est une encre à séchage par rayonnements ultra-violets, de composition .
50 à 55 % de Diacrylate de 2-(acryloyloxyméthyl)-2-éthyl-1,3-propanediyle,
15 à 20 % de Polyolacrylate,
15 à 20 % de Bisphenol A Epoxy Diacrylate,
5 à 10% d'aluminium en poudre stabilisé,
1 à 5 % de propane-2-ol.

Dans cette encre, les acrylates constituent le corps de l'encre, ou son véhiculant. L'aluminium permet d'obtenir l'effet miroir, et le propanol sert à l'ajustement de la viscosité.

Selon une disposition préférentielle, l'étape de lamination, propre à générer la fissuration de l'encre à effet miroir, comporte au moins :
- un premier traitement à une température comprise entre 110 et 150 °C, avec une pression de 80 à 120N/cm² pendant 10 à 20 min,
- un second traitement à une température comprise entre 16 et 20 °C avec une pression de 180 à 220N/ cm² pendant 10 à 20 min.

Outre ces traitements spécifiques à l'invention, la fabrication de la carte pourra également comporter des opérations complémentaires d'impression, typiquement d'impression offset, sur l'une ou les deux faces de l'assemblage précité comportant les deux couches de substrat enserrant la couche d'encre à effet miroir, ainsi que des opérations classiques de mise en place de couches de protections sur les deux faces ainsi imprimées ou non.

L'invention a aussi pour objet une carte à effet visuel marbré, typiquement obtenue par le procédé décrit précédemment, ladite carte comportant une première couche de substrat translucide ou transparente et une deuxième couche de substrat, et une couche d'encre d'impression fissurée entre les deux couches de substrat de manière à laisser percevoir la deuxième couche de substrat par les fissuration de la couche d'encre, caractérisée en ce que la couche d'encre d'impression fissurée comporte une encre à effet miroir, assurant la réflexion de lumière à travers la première couche de substrat translucide ou transparente.

Selon des particularités complémentaires :
- l'épaisseur de la couche d'encre à effet miroir est typiquement de 5 à 10 µm.
- la deuxième couche de substrat est colorée dans sa masse.
- alternativement, la deuxième couche de substrat peut être transparente, et comporter en option un motif déposé sur sa face du côté de la couche d'encre miroir.
- au moins la première couche de substrat transparent est en PVC.
- la deuxième couche de substrat est aussi préférentiellement en PVC.
- préférentiellement l'encre à effet miroir est une encre à séchage par rayonnements ultra-violets, de composition :
   50 à 55 % de Diacrylate de 2-(acryloyloxyméthyl)-2-éthyl-1,3-propanediyle,
   15 à 20 % de Polyolacrylate,
   15 à 20 % de Bisphenol A Epoxy Diacrylate,
   5 à 10% d'aluminium en poudre stabilisé,
   1 à 5 % de propane-2-ol.
- la carte est imprimée sur l'une ou les deux faces de l'assemblage précité comportant les deux couches de substrat enserrant la couche d'encre à effet miroir,
- la carte comporte des couches de protections sur les deux faces ainsi imprimées ou non.

D'autres caractéristiques et avantages apparaîtront dans la description qui va être faite d'une carte conforme à l'invention, ainsi que du procédé de fabrication de cette carte.

On se reportera aux dessins annexés dans desquels
- la figure 1 est une vue schématique en coupe d'une carte conforme à l'invention,
- la figure 2 est une vue de la carte avant lamination,
- la figure 3 est une vue simplifiée illustrant l'aspect visuel de la carte après lamination.

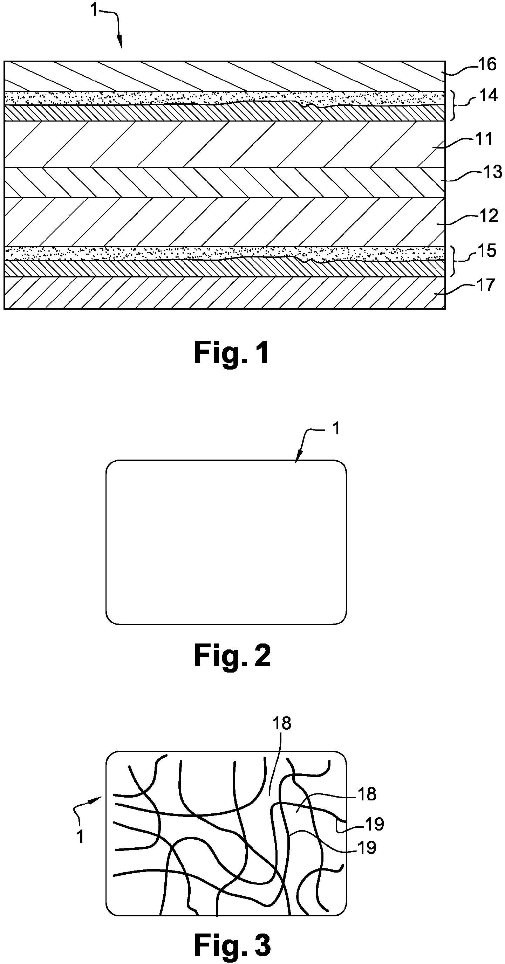

La figure 1 montre une vue en coupe d'une carte 1 de norme ISO 7810. Cette carte 1 peut par exemple être une carte bancaire de paiement, d'identification, d'identité ou encore une carte magnétique, à puce ou à communication en champ proche (NFC pour l'acronyme anglais de Nier Field Communication). Son épaisseur est typiquement de l'ordre de 0,8 à 1,2 mm.

La carte 1 comporte une première couche de substrat 11 en PVC transparent et une deuxième couche de substrat 12, qui peut également être en PVC transparent, ou coloré dans la masse, ou encore porter, sur sa face située du côté de la première couche, un motif imprimé, coloré ou non.

La carte comporte de plus, entre les couches de substrat 11 et 12, une couche d'encre à effet miroir 13, d'épaisseur de l'ordre de 5 à 10 µm. Cette couche d'encre, dont l'obtention sera détaillée par la suite, est fissurée, les fissures 19 s'étendant de manière aléatoire, comme cela est illustré schématiquement sur la figure 3, et laissant apparaître la deuxième couche de substrat 12 lorsque la carte est observée du côté de la première couche de substrat transparent 11. Dans les zones non fissurées 18, l'encre à effet miroir réfléchit la lumière incidente traversant la première couche de substrat transparent 11. La combinaison des fissures 19, laissant apparaître la deuxième couche de substrat, avec cette réflexion par les zones 18 où l'encre n'est pas fissurée, résulte en l'effet marbré recherché pour la carte.

On notera que cette couche 13 d'encre à effet miroir fissurée peut s'étendre sur toute la surface de la carte 1, comme illustré sur la figure 3, mais pourrait aussi s'étendre sur seulement une partie de cette surface. Une puce ou une antenne ou autre composant électronique nécessaire au fonctionnement de la carte peuvent être intégrés dans ou entre les deux couches de substrat 11 et 12.

Dans l'exemple présenté figure 1, la carte comporte en plus, sur les faces opposées de l'ensemble formé par les deux couches de substrat incorporant entre elles le film d'encre fissurée, des impressions 14, 15, de type courant, à visée informative ou décorative. La carte comporte encore, sur chaque face, une couche de protection 16, 17 transparente ou translucide.

La carte, ainsi illustrée par les figures 1 et 3, est fabriquée de la manière suivante.

On prépare la première couche de substrat 11 dans une feuille de PVC transparent.

On dépose par impression, typiquement par sérigraphie, une couche d'encre à effet miroir 13 sur une face de la première couche de substrat 11.

L'encre à effet miroir est typiquement une encre comportant de l'aluminium, destiné à procurer l'effet miroir.

La composition de cette encre est par exemple :
- 50 à 55 % de Diacrylate de 2-(acryloyloxyméthyl)-2-éthyl-1,3-propanediyle,
- 15 à 20 % de Polyolacrylate,
- 15 à 20 % de Bisphenol A Epoxy Diacrylate,
- 5 à 10% d'aluminium en poudre stabilisé,
- 1 à 5 % de propane-2-ol.

Après un dépôt uniforme de cette encre sur la première couche de substrat, on effectue un séchage et un durcissement de l'encre par insolation sous rayons UV, cette insolation ne provoquant pas de fissurations de l'encre.

On place ensuite sur la couche d'encre ainsi séchée et durcie la deuxième couche de substrat, obtenue à partir d'une feuille de PVC, préférentiellement transparent mais pouvant aussi être colorée dans la masse ou revêtue d'un motif pré-imprimé sur la face venant en contact avec la couche d'encre.

On procède ensuite aux impressions des informations ou décors 14 et 15 puis on met en place les couches de protection 16 et 17 de chaque côté de la carte.

On effectue ensuite la lamination de la carte, avec mise en oeuvre des deux étapes suivantes :
- un premier traitement à une température élevée de 130 °C, sous une pression de 100N/cm² pendant 15 min,
- un second traitement à une température basse de 18 °C sous une pression plus forte de 200 N/ cm² pendant également une quinzaine de minutes,
cette suite de traitement ayant pour effet de provoquer la fissuration de l'encre à effet miroir tout en assurant l'assemblage des différentes couches constitutives, comme cela est bien connu par ailleurs.

Le fait que l'encre à effet miroir soit fissurée lors de la lamination de la carte 1 par un traitement thermique et mécanique garantit la durabilité de l'effet marbré car les fissures sont en quelque sorte figées par l'adhésion des deux couches de substrat 11 et 12 sur la couche d'encre et entre elles au niveau des fissures.

Par ailleurs, le fait que les fissures 19 se forment lors de l'étape classique de lamination d'une carte 1 multicouche, permet d'intégrer la formation des fissures 19 et ainsi l'effet visuel marbré dans le processus standard de fabrication et ainsi permet de limiter les coûts de fabrication et de réalisation de l'effet visuel marbré. Les coûts sont d'autant plus limités que l'étape d'insolation UV peut aussi être réalisée directement dans la foulée de l'impression avec l'encre à effet miroir.

## Revendications

1. Procédé de fabrication d'une carte multicouche présentant un effet marbré, selon lequel on dispose entre une première couche de substrat (11) translucide ou transparente et une deuxième couche de substrat (12), une couche d'encre d'impression apte à se fissurer lors d'une étape de lamination de la carte, puis on procède à ladite lamination, de manière que ladite couche d'encre se fissure,
**caractérisé en ce que** la couche d'encre d'impression (13) comporte une encre à effet miroir.

2. Procédé selon la revendication 1, **caractérisé en ce que** la couche d'encre à effet miroir (13) est déposée sur la première couche de substrat transparent ou translucide (11).

3. Procédé selon la revendication 1, **caractérisé en ce que** l'épaisseur de l'encre déposée est de 5 à 10 µm.

4. Procédé selon la revendication 1, **caractérisé en ce que** la deuxième couche de substrat (12) est transparente.

5. Procédé selon la revendication 1, **caractérisé en ce que** la deuxième couche de substrat (12) est colorée dans sa masse ou comporte un motif déposé sur sa face du côté de la couche d'encre miroir.

6. Procédé selon la revendication 1, **caractérisé en ce que** la première couche de substrat transparent ou translucide (11) et la deuxième couche de substrat (12) sont en PVC.

7. Procédé selon la revendication 1, **caractérisé en ce que** l'encre à effet miroir comporte:
50 à 55 % de Diacrylate de 2-(acryloyloxyméthyl)-2-éthyl-1,3-propanediyle,
15 à 20 % de Polyolacrylate,
15 à 20 % de Bisphenol A Epoxy Diacrylate,
5 à 10% d'aluminium en poudre stabilisé,
1 à 5 % de propane-2-ol

8. Procédé selon la revendication 7, **caractérisé en ce que** l'encre à effet miroir est une encre à séchage par rayonnements ultra-violets.

9. Procédé selon la revendication 1, **caractérisé en ce que** l'étape de lamination, propre à générer la fissuration de l'encre à effet miroir, comporte au moins :
- un premier traitement à une température comprise entre 110 et 150 °C, avec une pression de 80 à 120N/cm² pendant 10 à 20 min,
- un second traitement à une température comprise entre 16 et 20 °C avec une pression de 180 à 220N/ cm² pendant 10 à 20 min.

10. Carte à effet visuel marbré, comportant une première couche (11) de substrat translucide ou transparente et une deuxième couche (12) de substrat, et une couche d'encre d'impression fissurée entre les deux couches de substrat de manière à laisser percevoir la deuxième couche de substrat (12) par les fissurations (19) de la couche d'encre, **caractérisée en ce que** la couche d'encre d'impression fissurée (13) comporte une encre à effet miroir, assurant la réflexion de lumière à travers la première couche de substrat translucide ou transparente.

11. Carte selon la revendication 10, **caractérisée en ce que** l'épaisseur de la couche d'encre à effet miroir est de 5µm à 10 µm.

12. Carte selon la revendication 10, **caractérisée en ce que** la deuxième couche de substrat (12) est transparente.

13. Carte selon la revendication 10, **caractérisée en ce que** la deuxième couche de substrat (12) est colorée dans sa masse ou comporte un motif déposé sur sa face du côté de la couche d'encre miroir.

14. Carte selon la revendication 10, **caractérisée en ce que** la première couche de substrat transparent (11) et la deuxième couche de substrat (12) sont en PVC.

15. Carte selon la revendication 10, **caractérisée en ce que** l'encre à effet miroir comporte:
50 à 55 % de Diacrylate de 2-(acryloyloxyméthyl)-2-éthyl-1,3-propanediyle,
15 à 20 % de Polyolacrylate,
15 à 20 % de Bisphenol A Epoxy Diacrylate,
5 à 10% d'aluminium en poudre stabilisé,
1 à 5 % de propane-2-ol.

16. Carte selon la revendication 10, **caractérisée en ce que** la carte est imprimée sur l'une ou les deux faces de l'assemblage comportant les deux couches de substrat enserrant la couche d'encre à effet miroir.
